# EUROPEAN PATENT SPECIFICATION

(11) **EP 1 597 324 B1**
(45) Date of publication and mention of the grant of the patent: **17.12.2014**
(21) Application number: 04713692.4
(22) Date of filing: 23.02.2004
(51) Int. Cl.: C09D 5/00, C08F 8/30, C08J 3/24, C09D 5/03

(54) **LOW SOLVENT POWDER COATING PROCESS FOR APPLYING THE COATING TO AN OBJECT COATED OBJECT OBTAINABLE WITH THE PROCESS AND PROCESS FOR LEVELING A COATING APPLIED TO AN OBJECT**
LÖSUNGSMITTELARME PULVERBESCHICHTUNG, VERFAHREN ZUR APPLICATION DER BESCHICHTUNG AUF EINEM GEGENSTAND, NACH DIESEM VERFAHREN HERSTELLBARE BESCHICHTETER GEGENSTAND, UND VERFAHREN ZUR AUSGLEICHUNG EINER AUF EINEM GEGENSTAND AUFGETRAGENEN BESCHICHTUNG
REVETEMENT EN POUDRE A FAIBLE TENEUR EN SOLVANT, PROCEDE POUR APPLIQUER CE REVETEMENT SUR UN OBJET, OBJET REVETU OBTENU AVEC CE PROCEDE, ET PROCEDE POUR ETALER UN REVETEMENT APPLIQUE SUR UN OBJET

(30) Priority: 25.02.2003 NL 1022777
(43) Date of publication of application: 23.11.2005
(73) Proprietor: Nederlandse Organisatie voor Toegepast -Natuurwetenschappelijk Onderzoek TNO, 2628 VK Delft (NL)
(72) Inventor: EL-GHAYOURY, Abdelkrim, NL-5643 HT Eindhoven (NL); HUIJS, Frank, NL-5223 ZL 's Hertogenbosch (NL)
(74) Representative: Jansen, Cornelis Marinus
(86) International application number: PCT/NL2004/000132
(87) International publication number: WO 2004/076567

(56) References cited:
- EP-A- 0 388 804
- DE-A- 4 104 319
- US-A- 3 435 003
- US-A- 4 273 909
- US-A- 5 641 856
- XIANGXU CHEN: "A Thermally Re-mendable Cross-Linked Polymeric Material" SCIENCE, vol. 295, no. 5560, 1 March 2002 (2002-03-01), pages 1698-1702, XP002257428 cited in the application

## Description

The invention relates to a process for applying a powder coating containing less than 25 wt.% of solvent to an object, and to a coated object obtainable with this process.

The known low-solvent coatings are usually based on water as a medium (aqueous dispersions or emulsions) or they are powdered. In such coatings, use is often made of two reactive components which react (crosslink) at an elevated temperature in order to form the coating. As reactive components, for instance epoxy resins, amino resins, acid or hydroxyl-functionalized resins or (protected) isocyanates are used. Due to the nature of these reactive components, handling materials containing these components is clearly an unhealthy undertaking, this in connection with the possibility of inhalation and skin contact.

Further, such crosslinking low-solvent coatings, and particularly powdered coatings, have the additional problem that, after use, the finally obtained surface often does not have good gloss, but looks more like the skin of an orange. It will be clear that the formation of such a surface is usually undesired from an esthetic point of view. The formation of such an undesired surface can be described as follows for the example of powdered coatings. In order to provide sufficient flow of the polymer particles from which the binding agent of a powder coating is built up, the temperature of the product needs to be raised to, for instance, 180°C after application of the powdered coating material. However, the individual polymer particles comprise different active or functional groups which react at such a temperature so that, during heating, an internal polymer network is created, which prevents a further flow of the polymer particles on the coated object and finally, when cooled down, results in a coating surface which does not have a good gloss, but resembles the skin of an orange.

US-A-4 273 909 describes a solvent-free thermosettable coating composition. Cross-linking is disclosed to occur at elevated temperatures.

US-A-5 641 856 describse a re-mouldable cross-linked resin comprising polymer chains which are connected to one another via Diels-Alder adducts.

US-A-3 435 003 describes cross-linked condensation polymers whose cross-linking is thermally reversible.

It has now particularly surprisingly been found that a low-solvent coating can be formulated which is much safer in terms of health, while, moreover, a surface with good gloss can be obtained therewith.

The invention therefore relates to a process for apploying a powder coating containing less than 25 wt.% of solvent to an object, said powder coating comprising a binding agent with functional groups of which a part of the functional groups form a reversible, covalent bond at a temperature T1 and a part of the functional groups form no covalent bond at a temperature T2, wherein T1 is lower than T2, and more covalent bonds have been formed by the functional groups at T1 than at T2, wherein the powder coating is applied to the object and the coating is then heated to temperature T2, after which the coating is cooled down to at least temperature T1, and wherein the coating when the surface thereof is brought to a temperature T2 is a flowing coating.

The covalent bond can be formed in an equilibrium reaction, so that, also, a part of the bonds has been formed at T1 and a part of the bonds has been broken at T2. It is essential, however, that (many) more bonds are formed at T1 than at T2.

The low-solvent coating used in the process of the invention further has the advantage that damaged surfaces of the coating can easily be mended without any permanent damage being visible. This has not been the case so far with conventional low-solvent coatings. In this connection, it is noted that the coating applied to an object can be damaged as a result of use so that, for instance, scratches occur on the coating surface. Such damages often need to be mended for esthetic purposes. This is usually done by providing the damaged part of the respective object or the whole object with a new coating layer. A clear drawback of such an approach is that a new coating batch needs to be used, which cost money and takes up time and may easily lead to color differences and other differences. However, if damaged, the coating according to the present invention can easily be mended by means of a heat source, for instance an oven, a blow-drier or heat gun without further coating materials being needed for this.

By bringing the temperature of the coating above the temperature at which the functional groups in the binding agent form a covalent bond, the coating can flow so that damages can easily be smoothed away without a permanent damage being visible. Further, at such an elevated temperature, it is possible to wholly or partly remove the coating from the object to which it has been applied or, for instance, to provide patterns in it which remain present after lowering the temperature. Together with the applied coating according to the invention, optionally, extra coating layers or other materials may be removed which have been applied to the coating according to the invention.

For the sake of completeness, it is noted that crosslinked matrices in which similar functional groups are used are described in Science, March 1, 2002, Vol. 295. However, the matrices described therein are used in completely different fields of application, such as composites, foams, glues and isolators for electronic gaskets.

The low-solvent coating used in the process of the invention is usually based on water as a medium (an aqueous dispersion or emulsion) or the coating is powdered.

The low-solvent coating used in the present invention is powdered. Compared to conventional powder coatings, such a powdered coating has the additional advantage that it has improved storage stability. In this connection, it is noted that, with conventional powder coatings, there is a delicate balance between storage stability and processing conditions. In practice, it is preferred to process such powders at relatively low temperatures of about 100°G instead of the conventional higher temperatures of, for instance, approximately 180°C. Besides this being energetically favorable, it also makes the powders suitable for temperature-sensitive substrates, such as wood and plastics. However, such processing temperatures are difficult to combine with the condition that the powders need to be able to be stored for many months at temperatures of 45-50°C without any powder particles starting to melt and/or liquefy. With the powdered coating used in the process of the invention, however, the chance of such premature melting and/or liquefying is considerably smaller.

In the context of the present application, low-solvent coatings are coatings which contain less than 25 wt.% of solvent. Conventional high-solvent coatings, by contrast, usually contain more than 50 wt.% of solvent. Preferably, the coatings according to the invention contain less than 15 wt.% of solvent, and still more preferably less than 5 wt.% of solvent. It will be clear to a skilled person that the powdered coatings used in the process of the invention essentially contain no solvent or no solvent whatsoever.

The functional groups of the binding agent which form a covalent bond may be identical functional groups or they may differ from each other.

Preferably, the invention relates to a low-solvent coating, in which the binding agent comprises at least two different functional groups A and B of which a part of the functional groups A and B form a covalent bond at a temperature T1 and a part of the functional groups A and B form no covalent bond at a temperature T2, with T1 being lower than T2, and more covalent bonds having been formed by the functional groups A and B at T1 than at T2.

The reversible, covalent bond between the functional groups can be brought about by means of different types of thermally reversible reactions. Such thermally reversible reactions can be chosen from the following group of reactions: Diels-Alder cycloaddition reactions; Michael reactions; nitroso dimerization reactions, cyclic anhydride reactions in which ester bonds are formed; reactions in which aliphatic ionene formation takes place; reactions in which urethane formation takes place; and reactions in which azlactone-phenol adduct formation takes place. A condition is that the reaction chosen from this group is thermally reversible. For a further description of these reactions, reference is made to J. Macromol. Sci. Rev. Macromol. Ghem. C33 (3), 1993, pp. 239-257.

In a particularly suitable embodiment, the covalent bond between the functional groups A and B is brought about by means of a Diels-Alder reaction.

In a suitable embodiment, the functional groups A comprise diene groups, and the functional groups B comprise dienophile groups.

Preferably, the invention relates to a low-solvent coating, in which the polymer particles of which the binding agent consists comprise multiple functional groups A and different or the same polymer particles of which the binding agent consists comprise multiple functional groups B.

The temperature T1 and temperature T2 are suitably 20-250°C and preferably 80-180°C, with T1 being lower than T2. Preferably, at T1, at least 5% of the functional groups have formed a covalent bond. Still more preferably, at T1, at least 50% of the functional groups have formed a covalent bond.

It will be clear that, preferably, the total amount of the functional groups A and the total amount of the functional groups B are essentially in the proportion of 1/1 (A/B).

The amounts to be used of the functional groups A and B depend, as a skilled person will understand, on the use of the coating, type of binding agent, the requirements imposed on the coating, etc.

Preferably, the functional groups A are furane, anthracene, thiophene and/or pyrrole groups. Still more preferably, the functional groups A are furane groups.

The functional groups B are preferably maleimide, fumarate, maleate and/or alkyne groups. Still more preferably, the functional groups B are maleimide groups.

The amount of binding agent in the low-solvent coating depends, as a skilled person will understand, on the use of the coating, type of binding agent, requirements imposed on the coating, etc.

The functional groups can be incorporated in the binding agent in different manners. For instance, molecules comprising functional groups may be incorporated in a conventional binding agent such as for instance an acrylate resin or a polyester resin by means of known polymerization or modification reactions. As for the polymerization reactions, this may take place by means of radical polymerization, cationic polymerization, anionic polymerization, ring-opening polymerization or polycondensation. The modification may take place by means of known chemical reactions such as for instance substitution or addition.

In a further embodiment, the binding agent consists at least in part of molecules comprising at least two functional groups according to the invention without these molecules being incorporated in a resin, so-called "free" molecules. In this connection, it is important to note that conventional binding agents usually consist of one or more resins such as for instance acrylate resins and polyester resins, with functional groups being incorporated in the resin. For instance, according to the invention, the binding agent may consist in part of a conventional resin to which the functional groups according to the invention have been applied, while another part of the binding agent consists of molecules with the functional groups without these molecules being incorporated in a resin. Such conventional resins may also comprise other types of functional groups, such as for instance carboxyl and hydroxy groups. These other types of functional groups will be able to form non-reversible covalent bonds in the coating and thus provide the coating with certain desired properties. In a further embodiment, the binding agent consists in part of such free molecules comprising the functional groups according to the invention, while another part of the binding agent consists of one or more resins to which not the functional groups according to the invention but other functional groups are applied, such as for instance carboxyl and hydroxy groups. Preferably, the binding agent is essentially free from such other types of functional groups. Also, the binding agent may wholly consist of such free molecules with the functional groups.

The use of such free molecules with functional groups in coatings is new. Preferably, such binding agents comprise free molecules with a functional group A and molecules with a functional group B. The functional groups A are preferably chosen from furane, anthracene, thiophene and/or pyrrole groups, while the functional groups B are preferably chosen from maleimide, fumarate, maleate and/or alkyne groups. Still more preferably, the functional groups A are furane groups and the functional groups B are maleimide groups.

The molecular weight of the resin in which the functional groups have been incorporated or the molecular weight of the "free" molecules comprising at least two functional groups according to the invention depends on the use of the coating, the requirements imposed on the coating, etc. Preferably, the molecular weight of the resin or the molecules is 100-1,000,000 Dalton, and still more preferably 100-100,000 Dalton.

The binding agent may wholly consist of free molecules comprising at least two functional groups (A and B) according to the invention.

The binding agent may comprise one or more known binding agents for coatings. For instance, the binding agent may comprise one or more conventional epoxy resins, polyester resins, polyacrylate resins, polyurethane resins, polypropylene resins, polyethylene resins, nylon resins and/or polyvinylchloride resins. These resins can be prepared in manners known from the literature. Suitable polyester resins can be obtained via conventional preparation methods, such as for instance described in NL 9201443, the contents of which are inserted in this application by reference. When powder coatings comprise a binding agent containing polyesters, the polyesters may comprise other types of functional groups such as carboxyl and/or hydroxy groups to provide specific properties. Preferably, the binding agents according to the invention are essentially free from such other types of functional groups. Carboxyl-functional polyesters can be crosslinked with, for instance, triglycidyl isocyanurate in the conventional manner, while hydroxy-functional polyesters can be crosslinked with isocyanates in the known manner. The epoxy resins are suitably higher molecular bisphenol-A epoxy resins and can be crosslinked with amines, for instance dicyandiamine, anhydrides, phenols, and carboxyl-functional polyesters in the conventional manner. If the epoxy resin is crosslinked with a carboxyl-functional polyester, the obtained product is called a so-called hybrid because it is usually a mixture of approximately 50/50 polyester/epoxy. In the latter case, a catalyst such as for instance benzyltrimethylammonium chloride may be added for providing a good reactidn. The binding agent of the low-solvent coating according to the invention comprises, for instance, polyacrylates, polystyrene and/or polyesters, with the binding agent of a powder coating comprising, for instance, polyacrylates and/or polyesters, and that of a water-based coating preferably comprising polyacrylates and/or polystyrene/acrylate and/or polystyrene/butadiene.

When the low-solvent coating used in the process of the invention is a water-based coating, it preferably comprises 30-90 wt.% of water. When the low-solvent coating used in the process of the invention is a powder coating, it preferably comprises 30-100 wt.% of binding agent.

The coating used in the process of the invention may comprise one or more of the conventional organic solvents. Particularly, but not exclusively, intended here are solvents which have a higher boiling point than water and which are usually added to aqueous dispersions to improve the flow properties after drying. Typical examples of such solvents are glycol and derivates of glycol. However, the amount to be used of such solvents is preferably minimized due to the nature of the present invention, and in the case of a powdered coating, the coating essentially contains no solvent or no solvent whatsoever.

The low-solvent coatings used in the process of the invention can be formulated using techniques known to a skilled person.

The coatings used in the process of the present invention may further comprise one or more components which can have been chosen from the group of other coatings, solvents, dyes, additives, dispersants, catalysts, stabilizers, fillers and other conventional coating components. These components are usually present in amounts which are normally used in coatings.

The invention also relates to a coated object obtainable with the process according to the invention.

Also disclosed is a process for leveling a damaged coating surface of an object, the coating applied to the object being a low-solvent coating according to the invention, in which the temperature of the damaged coating surface is brought to temperature T2 and the then obtained flowing coating closes the damage by flowing, after which the coating is cooled down to at least temperature T1. In addition, the invention relates to a leveled object obtained with the above-mentioned process according to the invention.

### Example

### Preparation of block copolymer

10 grains of BMA (butyl methacrylate; 70.3 mmol; 70%) and 5 grams of FMA (furfuryl methacrylate; 30.1 mmol; 30%) were dissolved in 100 ml of toluene after which, subsequently, 400 mg of AIBN (2,2'-Azobis(isobutyronitrile); 0,2 mmol) was added. The obtained solution was degassed under a N₂ atmosphere for 1 hour, and was kept under N₂ overnight at a temperature of 80°C. Then, the solution was cooled down to room temperature and methanol was added in order to make the formed block copolymer precipitate. The obtained precipitation was separated by filtration and washed with methanol. In this manner, 13.8 grams of a white-colored crystalline product were obtained. The block polymer had a Tg of 40°C.

The preparation of the block copolymer BMA/FMA can be diagrammatically shown as follows:

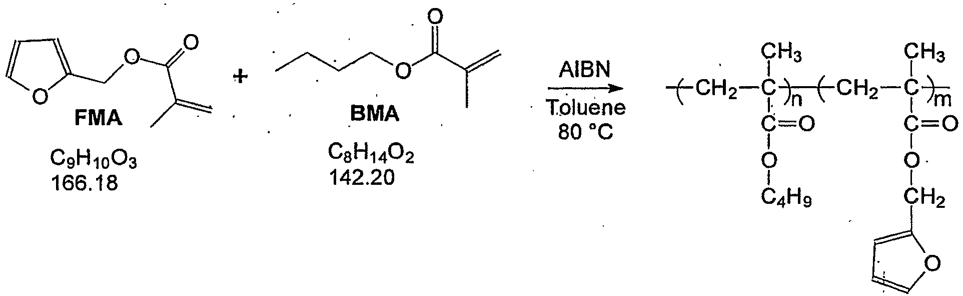

### Crosslinking reaction - formation of the covalent bond

The thus obtained product was dissolved together with 2 equivalents of BMI-H (bismaleimide; melting point of approximately 152-160°C) in dichloromethane, and the obtained solution was stirred for two days. The precipitation obtained in this manner was filtrated and washed with dichloromethane to remove unreacted bismaleimide.

### Coating experiments

The crosslinked powdered product was then heated to 160-165°C, whereby a polymer film was obtained which had good gloss. In a MEK test (applied force of 143 grams/cm), the coating obtained in this manner showed slight signs of damage only after 200 sanding movements, which implicates that the obtained coating surface was solvent-resistant. In the micro indentation test, on glass and aluminum substrate, the coating had a hardness of 221 N/mm² and 210 N/mm² respectively (see Tables 1 and 2).

### Leveling test

A damage was provided in the surface of the coating prepared hereinabove after the coating had been applied to an aluminum substrate. Then, the aluminum substrate with the coating applied to it was heated in an oven to 160°C, and then cooled down. In the thus obtained surface, the provided damage had completely disappeared. The same result was obtained using a heat gun instead of the oven.

**Table 1**

| **Aluminum substrate - Thickness of coating: 130-440** □**m** | | |
|---|---|---|
| **Hupl (N/mm2) General hardness** | **Hmax (mu) Max. depth of indentation** | **EIT (GPa) E-Modulus** |
| 215.584 | 4.62852 | 3.80654 |
| 204.793 | 4.73307 | 3.72502 |
| 206.281 | 4.71256 | 3.76634 |
| 206.923 | 4.71989 | 3.75126 |
| 211.386 | 4.7087 | 3.68272 |

**Table 2**

| **Glass substrate - Thickness of coating: 160-250** □**m** | | |
|---|---|---|
| **Hurl (N/mm2) General hardness** | **Hmax (mu) Max. depth of indentation** | **EIT (GPa) E-Modulus** |
| 219.756 | 4.62556 | 3.87019 |
| 219.198 | 4.61798 | 3.92491 |
| 223.603 | 4.58878 | 3.96016 |
| 221.137 | 4.61058 | 3.93544 |
| 219.747 | 3.79253 | 3.68272 |

## Claims

1. A process for applying a powder coating containing less than 25 wt.% of solvent to an object, said powder coating comprising a binding agent with functional groups of which a part of the functional groups form a reversible, covalent bond at a temperature T1 and a part of the functional groups form no covalent bond at a temperature T2, wherein T1 is lower than T2, and more covalent bonds have been formed by the functional groups at T1 than at T2, wherein the powder coating is applied to the object and the coating is then heated to temperature T2, after which the coating is cooled down to at least temperature T1, and wherein the coating when the surface thereof is brought to a temperature T2 is a flowing coating.

2. A process according to claim 1, wherein the object is heated so that the coating applied to the object is heated to temperature T2.

3. A process according to claim 1 or 2, wherein the binding agent comprises at least two different functional groups A and B wherein a part of the functional groups A and B form a covalent bond at a temperature T1 and a part of the functional groups A and B form no covalent bond at a temperature T2, wherein T1 is lower than T2, and more covalent bonds have been formed by the functional groups A and B at T1 than at T2.

4. A process according to claim 3, wherein the functional groups A comprise diene groups and the functional groups B comprise dienophile groups.

5. A process according to claim 3 or 4, wherein the binding agent comprises polymer particles of which a part of the polymer particles comprises multiple groups A and different or the same polymer particles comprise multiple functional groups B.

6. A process according to any one of claims 1-5, wherein temperature T1 and the temperature T2 are 20-250 °C, preferably the temperature T1 and the temperature T2 are 80-180 °C.

7. A process according to any one of claims 3-6, wherein the functional groups A and B form the covalent bond by means of a Diels-Alder reaction.

8. A process according to any one of claims 3-7, wherein the total amount of the functional groups A and the total amount of the functional groups B are essentially in the proportion of 1/1 (A/B).

9. A process according to any one of claims 3-8, wherein the functional groups A are furane, anthracene, thiophene and/or pyrrole groups, preferably the functional groups A are furane groups.

10. A process according to any one of claims 3-9, wherein the functional groups B are maleimide, fumarate, maleate and/or alkyne groups, preferably the functional groups B are maleimide groups.

11. A process according to any one of claims 1-10, wherein the coating contains less than 5 wt.% of solvent.

12. A process according to any one of claims 1-11, wherein the binding agent comprises one or more epoxy resins, polyester resins, polyacrylate resins, polyurethane resins, polypropylene resins, polyethylene resins, nylon resins and/or polyvinylchloride resins, and the functional groups have been incorporated in the resin(s) by means of polymerization and/or modification reactions, preferably the binding agent consists at least in part of molecules comprising at least two functional groups without these molecules being incorporated in a resin.

13. A process according to claim 12, wherein the binding agent comprises no other types of functional groups but those of which a part of the groups form a covalent bond at a temperature T1 and a part of the groups form no covalent bond at a temperature T2.

14. A process according to claim 12 or 13, wherein the resin(s) and/or molecules have a molecular weight of 100-1000 000 Dalton.

15. A process according to any one of claims 1-14, wherein the coating further comprising one or more components chosen from the group consisting of other coatings, solvents, dyes, additives, dispersants, catalysts, stabilizers, fillers and other conventional coating components.

16. A coated object obtainable with the process according to any one of claims 1-15.

## Patentansprüche

1. Verfahren zum Aufbringen einer Pulverbeschichtung, enthaltend weniger als 25 Gew.-% Lösungsmittel, auf einen Gegenstand, wobei die Pulverbeschichtung ein Bindemittel mit funktionellen Gruppen umfasst, wobei ein Teil der funktionellen Gruppen eine umkehrbare, kovalente Bindung bei einer Temperatur T1 bildet und ein Teil der funktionellen Gruppen keine kovalente Bindung bei einer Temperatur T2 bildet, wobei T1 niedriger als T2 ist, und mehr kovalente Bindungen von den funktionellen Gruppen bei T1 als bei T2 gebildet wurden, wobei die Pulverbeschichtung auf den Gegenstand aufgebracht wird und die Beschichtung dann auf die Temperatur T2 erwärmt wird, wonach die Beschichtung mindestens auf die Temperatur T1 abgekühlt wird, und wobei die Beschichtung, wenn deren Oberfläche auf eine Temperatur T2 gebracht wird, eine fließende Beschichtung ist.

2. Verfahren nach Anspruch 1, wobei der Gegenstand erwärmt wird, sodass die auf den Gegenstand aufgebrachte Beschichtung auf die Temperatur T2 erwärmt wird.

3. Verfahren nach Anspruch 1 oder 2, wobei das Bindemittel mindestens zwei verschiedene funktionelle Gruppen A und B umfasst, wobei ein Teil der funktionellen Gruppen A und B eine kovalente Bindung bei einer Temperatur T1 bildet und ein Teil der funktionellen Gruppen A und B keine kovalente Bindung bei einer Temperatur T2 bildet, wobei T1 niedriger ist als T2, und mehr kovalente Bindungen von den funktionellen Gruppen A und B bei T1 als bei T2 gebildet wurden.

4. Verfahren nach Anspruch 3, wobei die funktionellen Gruppen A Diengruppen umfassen und die funktionellen Gruppen B dienophile Gruppen umfassen.

5. Verfahren nach Anspruch 3 oder 4, wobei das Bindemittel Polymerpartikel umfasst, wovon ein Teil der Polymerpartikel mehrere Gruppen A umfasst, und verschiedene oder dieselben Polymerpartikel mehrere funktionelle Gruppen B umfassen.

6. Verfahren nach einem der Ansprüche 1-5, wobei die Temperatur T1 und die Temperatur T2 20-250 °C sind, bevorzugt die Temperatur T1 und die Temperatur T2 80-180 °C sind.

7. Verfahren nach einem der Ansprüche 3-6, wobei die funktionellen Gruppen A und B die kovalente Bindung mittels einer Diels-Alder-Reaktion bilden.

8. Verfahren nach einem der Ansprüche 3-7, wobei die Gesamtmenge der funktionellen Gruppen A und die Gesamtmenge der funktionellen Gruppen B im Wesentlichen im Verhältnis 1/1 (A/B) sind.

9. Verfahren nach einem der Ansprüche 3-8, wobei die funktionellen Gruppen A Furan-, Anthracen-, Thiophen- und/oder Pyrrolgruppen sind, bevorzugt sind die funktionellen Gruppen A Furangruppen.

10. Verfahren nach einem der Ansprüche 3-9, wobei die funktionellen Gruppen B Maleimid-, Fumarat-, Maleat- und/oder Alkyngruppen sind, bevorzugt sind die funktionellen Gruppen B Maleimidgruppen.

11. Verfahren nach einem der Ansprüche 1-10, wobei die Beschichtung weniger als 5 Gew.-% an Lösungsmittel enthält.

12. Verfahren nach einem der Ansprüche 1-11, wobei das Bindemittel eines oder mehrere von Epoxidharzen, Polyesterharzen, Polyacrylatharzen, Polyurethanharzen, Polypropylenharzen, Polyethylenharzen, Nylonharzen und/oder Polyvinylchloridharzen umfassen und die funktionellen Gruppen mittels Polymerisations- und/oder Modifikationsreaktionen in das/die Harz(e) eingebunden wurden, bevorzugt das Bindemittel mindestens teilweise aus Molekülen, umfassend mindestens zwei funktionelle Gruppen, besteht, ohne dass diese Moleküle in ein Harz eingebunden sind.

13. Verfahren nach Anspruch 12, wobei das Bindemittel keine andere Art von funktionellen Gruppen umfasst, außer denen, von denen ein Teil der Gruppen eine kovalente Bindung bei einer Temperatur T1 bildet und ein Teil der Gruppen keine kovalente Bindung bei einer Temperatur T2 bildet.

14. Verfahren nach Anspruch 12 oder 13, wobei das/die Harz(e) und/oder Moleküle ein Molekulargewicht von 100-1.000.000 Dalton haben.

15. Verfahren nach einem der Ansprüche 1 bis 14, wobei die Beschichtung ferner eine oder mehrere Komponenten umfasst, ausgewählt aus der Gruppe bestehend aus anderen Beschichtungen, Lösungsmitteln, Farbstoffen, Additiven, Dispersionsmitteln, Katalysatoren, Stabilisierungsmitteln, Füllmitteln und anderen konventionellen Beschichtungskomponenten.

16. Beschichteter Gegenstand, herstellbar durch das Verfahren nach einem der Ansprüche 1-15.

## Revendications

1. Procédé pour appliquer un revêtement de poudre contenant moins de 25 % en poids de solvant sur un objet, le revêtement de poudre comprenant un agent de liaison ayant des groupes fonctionnels dont une partie des groupes fonctionnels forme une liaison covalente réversible à une température T1 et une partie des groupes fonctionnels de liaison ne forme pas de liaison covalente à une températureT2, où T1 est inférieure à T2, et plus de liaisons covalentes ont été formées par des groupes fonctionnels à T1 qu'à T2, dans lequel le revêtement de poudre est appliqué sur l'objet et le revêtement est ensuite chauffé à la température T2, après quoi le revêtement est refroidi au moins à la température T1, et dans lequel le revêtement lorsque la surface de celui-ci est amenée à une température T2 est un revêtement par écoulement.

2. Procédé selon la revendication 1, dans lequel l'objet est chauffé de sorte que le revêtement appliqué sur l'objet est chauffé à la température T2.

3. Procédé selon la revendication 1 ou 2, dans lequel l'agent de liaison comprend au moins deux groupes fonctionnels différents A et B, dans lequel une partie des groupes fonctionnels A et B forme une liaison covalente à une température T1 et une partie des groupes fonctionnels A et B ne forme pas de liaison covalente à une température T2, où T1 est inférieur à T2, et plus de liaisons covalentes ont été formées par les groupes fonctionnels A et B à T1 qu'à T2.

4. Procédé selon la revendication 3, dans lequel les groupes fonctionnels A comprennent des groupes diènes et les groupes fonctionnels B comprennent des groupes diènophiles.

5. Procédé selon la revendication 3 ou 4, dans lequel l'agent de liaison comprend des particules de polymère dont une partie des particules de polymère comprend de multiples groupes A et d'autres ou les mêmes particules de polymère comprennent de multiples groupes fonctionnels B.

6. Procédé selon l'une quelconque des revendications 1 à 5, dans lequel la température T1 et la température T2 sont de 20 à 250°C, de préférence la température T1 et la température T2 sont de 80 à 180°C.

7. Procédé selon l'une quelconque des revendications 3 à 6, dans lequel les groupes fonctionnels A et B forment la liaison covalente par l'intermédiaire d'une réaction de Diels-Alder.

8. Procédé selon l'une quelconque des revendications 3 à 7, dans lequel la quantité totale des groupes fonctionnels A et la quantité totale des groupes fonctionnels B sont essentiellement dans le rapport de 1/1 (A/B).

9. Procédé selon l'une quelconque des revendications 3 à 8, dans lequel les groupes fonctionnels A sont des groupes furane, anthracène, thiophène et/ou pyrrole, de préférence les groupes fonctionnels A sont des groupes furane.

10. Procédé selon l'une quelconque des revendications 3 à 9, dans lequel les groupes fonctionnels B sont des groupes maléimide, fumarate, maléate et ou alkyne, de préférence les groupes fonctionnels B sont des groupes maléimide.

11. Procédé selon l'une quelconque des revendications 1 à 10, dans lequel le revêtement contient moins de 5 % en poids de solvant.

12. Procédé selon l'une quelconque des revendications 1 à 11, dans lequel l'agent de liaison comprend une ou plusieurs résines époxy, résines de polyester, résines de polyacrylate, résines de polyuréthane, résines de polypropylène, résines de polyéthylène, résines de Nylon et/ou des résines de polychlorure de vinyle, et les groupes fonctionnels ont été incorporés dans la ou les résines par l'intermédiaire de réactions de polymérisation et/ou de modification, de préférence l'agent de liaison est constitué au moins en partie de molécules comprenant au moins deux groupes fonctionnels, sans que ces molécules n'aient été incorporées dans une résine.

13. Procédé selon la revendication 12, dans lequel l'agent de liaison ne comprend pas d'autres types de groupes fonctionnels que ceux dont une partie des groupes forme une liaison covalente à une température T1 et une partie des groupes ne forme pas de liaison covalente à une température T2.

14. Procédé selon la revendication 12 ou 13, dans lequel la ou les résines et/ou les molécules ont un poids moléculaire de 100 à 1.000.000 de Dalton.

15. Procédé selon l'une quelconque des revendications 1 à 14, dans lequel le revêtement comprend de plus un ou plusieurs composants choisis parmi le groupe constitué d'autres revêtements, solvants, colorants, additifs, dispersants, catalyseurs, stabilisateurs, charges et autres composants de revêtement habituels.

16. Objet revêtu pouvant être obtenu à l'aide du procédé selon l'une quelconque des revendications 1 à 15.
